# EUROPEAN PATENT APPLICATION

(11) **EP 4 834 971 A1**
(43) Date of publication of application: **04.11.2026**
(21) Application number: 25861705.9
(22) Date of filing: 16.06.2025
(51) Int. Cl.: C08G 65/12, H01M 4/62, H01M 4/133, H01M 10/0525, C08G 65/24

(54) **GRANULATION ADDITIVE AND METHOD FOR MANUFACTURING HIGH-RELIABILITY LITHIUM-ION BATTERY USING SAME**

(30) Priority: 04.03.2025 CN 202510254017
(71) Applicant: Eve Energy Co., Ltd, Huizhou, Guangdong 516006 (CN)
(72) Inventor: LI, Le, Huizhou Guangdong 516006 (CN); DENG, Huihui, Huizhou Guangdong 516006 (CN); SUN, Peiling, Huizhou Guangdong 516006 (CN); CAO, Lang, Huizhou Guangdong 516006 (CN)
(74) Representative: Tiburzi, Andrea
(86) International application number: PCT/CN2025/101128
(87) International publication number: WO 2026/183984

(57) **Abstract**

The present application belongs to the technical field of battery materials. The present application provides a granulation additive and a preparation method for high-reliability lithium-ion batteries using the same. The preparation method involves adding a granulation additive into a cathode material for batteries. The granulation additive is a water-soluble polyether resin obtained through ring-opening polymerization of an organic compound A under the action of an organic weak base B serving as an initiator and a solvent C. The granulation additive possesses high adhesive strength and good electrical conductivity, and can function as a flexible binder and be used in conjunction with conventional binders. During the granulation process, the granulation additive has binding and granulating effects, rounds the cathode powder particles and improves the uniformity of the cathode powder. Using the granulation additive can overcome limitations arising from conventional binders used alone, such as insufficient binding strength, and reduced stability and increased internal resistance under high-temperature operating conditions, thereby effectively improving the stability and reliability of the cathodes and cells.

## Description

This application claims priority to Chinese Patent Application No. 202510254017.8 filed with CNIPA on March 4, 2025, the disclosure of which is incorporated herein by reference in its entirety.

### TECHNICAL FIELD

The present application relates to the field of battery materials, and specifically relates to a granulation additive and a preparation method for high-reliability lithium-ion batteries using the same.

### BACKGROUND

Lithium manganese button cells, known for the advantages such as high energy density, long lifespan, and stable output voltage, are widely used in small electronic devices. In related technologies, granulation technology is typically employed to form particles of specific sizes and shapes by mixing and granulating an active material, a conductive agent, a binder, and other components, which improves the flowability of the cathode powder, enhances compaction density and conductivity, optimizes wettability and processability, and reduces dust pollution.

### TECHNICAL PROBLEM

During the granulation process, the binder plays a critical role and significantly influences various aspects including the granulation procedure and the performance of granulated products. Conventional cathode granulation processes for lithium batteries commonly employ PTFE emulsions or polyacrylic binders. However, the cathode powder produced using these binders often suffers from drawbacks such as inconsistent particle size, poor flowability, and insufficient binding strength, which limits the battery performance.

Therefore, it is necessary to develop a novel cathode granulation scheme, which can effectively improve granulation uniformity by simple processes, and in turn enhance the performance of granulated cathode materials, cathodes and batteries, and endow cells with high reliability.

### TECHNICAL SOLUTION

The present application provides a granulation additive and a preparation method for high-reliability lithium-ion batteries using the same. The preparation method involves adding a granulation additive into the cathode material for batteries. The granulation additive is a water-soluble polyether resin obtained through the ring-opening polymerization of an organic compound A under the action of an organic weak base B serving as an initiator and a solvent. The granulation additive possesses high adhesive strength and good electrical conductivity, and can function as a flexible binder and be used in conjunction with conventional binders. During the granulation process, the granulation additive has binding and granulating effects, rounds the cathode powder particles and improves the uniformity of the cathode powder. Using the granulation additive can overcome limitations arising from conventional binders used alone, such as insufficient binding strength, and reduced stability and increased internal resistance under high-temperature operating conditions, thereby effectively improving the stability and reliability of the cathodes and cells.

In a first aspect, the present application provides a granulation additive for cathode materials. The granulation additive comprises a water-soluble polyether resin. The water-soluble polyether resin is prepared by subjecting an organic compound A to ring-opening polymerization under the action of an organic weak base B serving as an initiator and a solvent C. The organic compound A comprises at least one of an ether compound containing an ether functional group (R-O-R') and/or an epoxide compound containing an epoxy group (-C₂H₄O).

In a second aspect, the present application provides a granulation method for cathode materials, and the granulation method comprises:
subjecting a cathode active material and a conductive agent to a first mixing to obtain a mixed material; subjecting the mixed material, a binder, and the granulation additive described in the first aspect to a second mixing, and then performing granulation and baking in sequence to obtain a granulated cathode powder.

In a third aspect, the present application provides a granulated cathode powder, and the granulated cathode powder is obtained via the granulation method as described in the second aspect.

In a fourth aspect, the present application provides a preparation method for a cathode sheet, and the preparation method comprises compressing the granulated cathode powder as described in the third aspect to obtain the cathode sheet.

In a fifth aspect, the present application provides a cathode sheet, and the cathode sheet is obtained via the preparation method as described in the fourth aspect.

In a sixth aspect, the present application provides a battery, and the battery comprises the cathode sheet as described in the fifth aspect.

### BENEFICIAL EFFECTS

Compared with the related art, the present application has at least the following beneficial effects.

The granulation additive is a water-soluble polyether resin prepared by subjecting particular organic compound A and organic weak base B to polymerization. The granulation additive possesses high adhesive strength and good electrical conductivity, and can function as a flexible binder and be used in conjunction with conventional binders. During the granulation process, the granulation additive has binding and granulating effects, rounds the cathode powder particles and improves the uniformity of the cathode powder. Using the granulation additive can overcome limitations arising from conventional binders used alone, such as insufficient binding strength, and reduced stability and increased internal resistance under high-temperature operating conditions, thereby effectively improving the stability and reliability of the cathodes and cells.

Other aspects will be appreciated upon reading and understanding the detailed description.

### EMBODIMENTS OF THE PRESENT APPLICATION

In a first aspect, the present application provides a granulation additive for cathode materials. The granulation additive comprises a water-soluble polyether resin. The water-soluble polyether resin is prepared by subjecting an organic compound A to ring-opening polymerization under the action of an organic weak base B serving as an initiator and a solvent C. The organic compound A comprises at least one of an ether compound containing an ether functional group (R-O-R') and/or an epoxide compound containing an epoxy group (-C₂H₄O).

The granulation additive of the present application at least has beneficial effects in the following four aspects.
1) Effectively improving the uniformity of the granulated cathode powder: during the granulation process of the cathode material, the particle growth is mainly divided into four stages: ① wetting and nucleation; ② growth; ③ coalescence; and ④ breakage. The granulation additive has a relatively large particle size, and can serve as nucleation sites after wetting. Particles with a small particle size will adhere to the surface of particles with a large particle size. Under the influence of external mechanical forces and capillary forces, the wetted particles grow into larger granules. The granulation additive possesses a unique C-O-C main-chain skeleton structure. The ether oxygen atoms of the polymer chains contain electron pairs and have a strong tendency to form hydrogen bonds, which enables the water-soluble polyether resin particles to adsorb onto the surface of solid particles, forming a bilayer structure. The bilayer structure enhances the water-wetting degree of the solid particles; accordingly solid particles repel each other due to electrostatic repulsion and achieve excellent dispersion; thereby, the cathode active material, the conductive agent, and the binder can be uniformly dispersed.
2) Effectively improving the adhesion between various materials: first, the granulation additive of the present application exhibits excellent water solubility and thickening properties. As a polymer capable of being dissolving completely by water, the granulation additive can be easily mixed with water to form a uniform solution to be used in granulation. The granulation additive also demonstrates efficient thickening capability, exhibiting high viscosity even at very low concentrations. The thickening effect primarily stems from the network structure formed by molecular chains in the aqueous solution. The network structure increases the viscosity and consistency of the solution, thereby enhancing the adhesive performance. Second, as mentioned above, the granulation additive also possesses excellent adsorption properties. When the granulation additive contacts with the surface of particles to be bonded, part of its molecular chains will interact with molecules on the particle surface, leading to an adsorption phenomenon. The adsorption increases the contact area between the binder and the particle surface, thereby improving adhesion and binding strength. The adsorption enables the granulation additive to effectively combine with various material particles and form strong bond.
3) Effectively promoting ion conduction: polymer chains of the granulation additive contain oxygen atoms. Due to the electronegativity of oxygen atoms, lithium ions are adsorbed near oxygen atoms and continuously undergo coordination and dissociation processes. The oxygen atoms in the chains and the lithium ions can engage in continuous coordination and dissociation processes, facilitating the migration of lithium ions. Under the influence of electric field, these chains begin to move, disrupting the balanced force field around lithium ions, and thusly lithium ions "hop" from one oxygen atom to another oxygen atom, thereby achieving ion conduction.
4) Effectively improving the conductivity for the cathode, reducing internal resistance, and enhancing stability and reliability: as described above, the granulation additive endows the active material and the conductive agent with sufficient, uniform, and strong bonding. Even under high-temperature operating conditions, the stability of the cathode can be maintained, improving the reliability of the cell.

The following are optional technical solutions for the present application, but they do not limit the technical solutions provided by the present application. Through the following technical solutions, the technical objectives and beneficial effects of the present application can be better achieved and realized.

As an optional technical solution of the present application, the ether compound comprises at least one of vinyl methyl ether, propylene oxide-ethylene oxide copolyether, or polyether polyol.

Optionally, the polyether polyol comprises at least one of polyoxypropylene glycol, polyoxypropylene triol, or polytetramethylene ether glycol.

Optionally, the epoxide compound comprises alkylene oxide, and the alkylene oxide comprises at least one of epichlorohydrin, styrene oxide, ethylene oxide, cyclohexene oxide, or 1,2-butylene oxide.

As an optional technical solution of the present application, the organic weak base B comprises at least one of potassium diisopropylamide, sodium dihexylamide, or potassium diphenylmethanide.

Optionally, the solvent C comprises triethylene glycol and/or tetrahydrofuran.

Optionally, a weight-average molecular mass of the water-soluble polyether resin is 0.5-8 million, for example, 1 million, 2 million, 3 million, and 4 million; further optionally, 1-4 million. The weight-average molecular mass is determined directly using a multi-angle laser light scattering instrument.

Optionally, the water-soluble polyether resin is in granular form with an average particle size of 100-500 µm, for example, 100 µm, 150 µm, 200 µm, 300 µm, or 500 µm.

In the present application, the water-soluble polyether resin, which has a relatively small particle size, can offer better solubility and dispersibility. However, the particle size can be adjusted reasonably within the optional range according to practical conditions.

In a second aspect, the present application provides a granulation method for cathode materials, and the granulation method comprises:
subjecting a cathode active material and a conductive agent to a first mixing to obtain a mixed material; subjecting the mixed material, a binder, and the granulation additive described in the first aspect to a second mixing, and then performing granulation and baking in sequence to obtain a granulated cathode powder.

In the granulation method of the present application, a combination of the binder and the granulation additive can further enhance the stability and safety of the battery. However, compared to related technologies where the granulation additive is not used, a smaller amount of binder is used in the present application.

As an optional technical solution of the present application, the cathode active material comprises a cathode active material; the cathode active material comprises a manganese-containing oxide; the manganese-containing oxide comprises manganese dioxide; and a specific surface area of the cathode active material is 10-30 m²/g, for example, 10 m²/g, 17 m²/g, 20 m²/g, 25 m²/g, or 30 m²/g.

In lithium-manganese dioxide batteries, if the specific surface area of the cathode active material is overly low, it tends to result in low open-circuit voltage, low load voltage, and reduced pulse performance. Conversely, if the specific surface area is too high, the increased active sites of the active material are prone to side reactions with the electrolyte under high-temperature storage conditions, leading to gas generation and other adverse phenomena.

Optionally, the conductive agent comprises a first conductive agent and a second conductive agent; the first conductive agent comprises graphite; and the second conductive agent comprises at least one of acetylene black, conductive carbon black, carbon nanotubes, Ketjen black, or graphene.

Optionally, a particle size D₅₀ of the first conductive agent is 10-80 µm, for example, 10 µm, 15 µm, 20 µm, 25 µm, 30 µm, 35 µm, 40 µm, 45 µm, 50 µm, 55 µm, 60 µm, 65 µm, 70 µm, 75 µm, or 80 µm; and optionally, 20-50 µm.

Optionally, a specific surface area of the first conductive agent is 10-40 m²/g, for example, 10 m²/g, 15 m²/g, 20 m²/g, 25 m²/g, 30 m²/g, 35 m²/g, or 40 m²/g; and optionally, 20-40 m²/g.

Optionally, a specific surface area of the second conductive agent is 50-800 m²/g, for example, 500 m²/g, 600 m²/g, 700 m²/g, or 800 m²/g; and further optionally, 500-800 m²/g.

In the present application, the first conductive agent, graphite, has a relatively large specific surface area, providing more channels for lithium-ion migration and thereby increasing the theoretical capacity. The specific surface area of the second conductive agent is positively correlated with the oil absorption number. The larger the specific surface area, the higher the oil absorption number, which is more conducive to the wettability and electrolyte absorption performance of the cathode.

Optionally, a mass ratio of the first conductive agent to the second conductive agent is 1:(0.1-1.5), for example, 1:0.1, 1:0.2, 1:0.3, 1:0.4, 1:0.5, 1:0.6, 1:0.7, 1:0.8, 1:0.9, 1:1.0, 1:1.1, 1:1.2, 1:1.3, 1:1.4, or 1:1.5; and optionally, 1:(0.2-1).

Optionally, the binder comprises polytetrafluoroethylene (PTFE).

Optionally, based on a mass of the granulated cathode powder being 100%, the cathode active material accounts for 85%-95%, the conductive agent accounts for 4%-10%, and the binder accounts for 0.8%-3.5%, optionally, 2.5%-3.5%; and the granulation additive accounts for 0.2%-1.5%, optionally, 0.5%-1.5%.

As an optional technical solution of the present application, the first mixing comprises ball milling, and the ball milling is performed for a period of 2-4 h, for example, 2 h, 2.5 h, 3 h, or 4 h, but is not limited to the listed values, and other unlisted values within the numerical range are also applicable.

Optionally, the binder is pre-diluted to form a binder solution, and the binder solution is then used for the second mixing. The dilution is performed at 6-10 fold by mass, and optionally, 8-fold.

Optionally, the binder solution is a polytetrafluoroethylene emulsion.

Optionally, the baking is performed at a temperature of 170-190°C, for example, 170°C, 173°C, 175°C, 178°C, 180°C, 185°C, 188°C, or 190°C, and optionally, 180°C.

Optionally, the baking is performed until a moisture content falls within 0.5-1.5wt%, which may be, for example, 0.5wt%, 0.6wt%, 0.7wt%, 0.8wt%, 0.9wt%, 1wt%, 1.1wt%, 1.2wt%, 1.3wt%, 1.4wt%, or 1.5wt%. Under the mentioned condition, the powder exhibits good flowability, which is beneficial for the subsequent compressing (punch forming) process.

Optionally, the granulation method for cathode materials further comprises sieving after the baking to obtain the granulated cathode powder within 20-100 mesh.

In a third aspect, the present application provides a granulated cathode powder, and the granulated cathode powder is obtained via the granulation method as described in the second aspect.

In a fourth aspect, the present application provides a preparation method for a cathode sheet, and the preparation method comprises compressing the granulated cathode powder as described in the third aspect to obtain the cathode sheet.

Optionally, the compressing comprises punch forming, and the punch forming is performed under a pressure of 8-10 tons, for example, 8 tons, 8.3 tons, 8.5 tons, 8.8 tons, 9 tons, 9.3 tons, 9.5 tons, 9.8 tons, or 10 tons, and optionally, 9 tons; and for a pressure-holding period of 0.01-0.3 s, for example, 0.01 s, 0.05 s, 0.08 s, 0.s, 0.13 s, 0.15 s, 0.18 s, 0.2 s, 0.23 s, 0.25 s, 0.28 s, or 0.3 s, and optionally, 0.1 s.

In a fifth aspect, the present application provides a cathode sheet, and the cathode sheet is obtained via the preparation method as described in the fourth aspect.

In a sixth aspect, the present application provides a battery, and the battery comprises the cathode sheet as described in the fifth aspect.

In the present application, the cathode sheet obtained from the punch forming is subjected to vacuum baking at 190-210°C (for example, 190°C, 195°C, 200°C, 205°C, or 210°C) for 10-16 h (for example, 10 h, 11 h, 12 h, 131 h, 14 h, 15 h, or 16 h), and then can be used for cell assembly.

It should be noted that due to space limitations and to avoid redundancy, the present application does not exhaustively list all suitable values, but is also not limited to the values listed; other values within the above-mentioned ranges which are not listed are also applicable.

The technical solutions of the present application are further described below in terms of specific embodiments.

It should be clear to those skilled in the art that the embodiments are merely used for a better understanding of the present application and should not be regarded as a specific limitation to the present application.

### Example 1

This example provides a granulation additive for cathode materials. The granulation additive was composed of a water-soluble polyether resin, and the water-soluble polyether resin was prepared by subjecting an organic compound A to ring-opening polymerization in an organic weak base B serving as an initiator and a solvent C. The organic compound A was ethylene oxide, the organic weak base B was potassium diisopropylamide, and the solvent C was tetrahydrofuran.

A synthesis method for the water-soluble polyether resin comprises:
S1: Potassium diisopropylamide and tetrahydrofuran were added into a high-pressure reactor, stirred until evenly dispersed, and purged with nitrogen to remove oxygen, and then added with ethylene oxide; wherein based on a total mass being 100%, ethylene oxide, potassium diisopropylamide, and tetrahydrofuran accounted for 10%-45%, 0.0002%-0.005%, and 20%-90%, respectively;
S2: The pressure was adjusted to 0.2 -1.5 MPa by filling nitrogen, and the temperature was set between 40°C-60°C; then, a reaction was performed under these conditions until the system pressure no longer decreased; and
S3: Nitrogen was discharged, and reduced-pressure distillation was performed to obtain the water-soluble polyether resin.

The above water-soluble polyether resin had a weight-average molecular mass of 2.6 million, and showed granular form at an average particle size of 300 µm.

### Example 2

This example provides a granulation additive for cathode materials. The granulation additive was composed of a water-soluble polyether resin, and the water-soluble polyether resin was prepared by subjecting an organic compound A to ring-opening polymerization in an organic weak base B serving as an initiator and a solvent C. The organic compound A was epichlorohydrin, the organic weak base B was potassium diphenylmethanide, and the solvent C was tetrahydrofuran.

The water-soluble polyether resin was synthesized according to the same steps and numerical conditions as those in Example 1, which had a weight-average molecular mass of 1 million, and showed granular form at an average particle size of 200 µm.

### Example 3

This example provides a granulation additive for cathode materials. The granulation additive was composed of a water-soluble polyether resin, and the water-soluble polyether resin was prepared by subjecting an organic compound A to ring-opening polymerization in an organic weak base B serving as an initiator and a solvent C. The organic compound A was 1,2-butylene oxide, the organic weak base B was sodium dihexylamide, and the solvent C was tetrahydrofuran.

The water-soluble polyether resin was synthesized according to the same steps and numerical conditions as those in Example 1, which had a weight-average molecular mass of 4 million, and showed granular form at an average particle size of 400 µm.

### Application Example 1

This application example provides a granulation method for cathode materials, and the granulation method comprises:
A cathode active material and a conductive agent were subjected to a first mixing to obtain a mixed material, and the cathode active material was a cathode active material of manganese dioxide with a specific surface area of 20 m²/g. The conductive agent comprised a first conductive agent and a second conductive agent; the first conductive agent was graphite, the second conductive agent was acetylene black, the first conductive agent had a particle size D₅₀ of 35 µm and a specific surface area of 20 m²/g, and the second conductive agent had a specific surface area of 65 m²/g. A mass ratio of the first conductive agent to the second conductive agent was 1:1. The first mixing was performed in a manner of ball milling for 4 h. Then, the granulation additive provided by Examples 1-3 were separately subjected to a second mixing with the mixed material and a binder. The second mixing comprised mixing the mixed material with the granulation additive first, and then adding and mixing with the binder. The binder was polytetrafluoroethylene, and specifically, a polytetrafluoroethylene emulsion obtained by diluting polytetrafluoroethylene 8-fold by mass was used. Then, the mixture was subjected to granulation, baking at 180°C until a moisture content reached 0.8wt%, and sieving at 20-100 mesh in sequence. The material retained on a 100-mesh sieve was the granulated cathode powder. Based on a mass of the granulated cathode powder being 100%, the cathode active material accounted for 90%, the conductive agent accounted for 6%, the binder accounted for 3.5%, and the granulation additive accounted for 0.5%.

### Application Example 2

This application example provides a granulation method for cathode materials, which uses the granulation additive provided in Example 1. However, in this granulation method, the proportion of the binder was adjusted from 3.5% to 3%, and the proportion of the granulation additive was adjusted from 0.5% to 1%. Except for the above, other conditions were exactly the same as those in Application Example 1.

### Application Example 3

This application example provides a granulation method for cathode materials, which uses the granulation additive provided in Example 1. However, in this granulation method, the proportion of the binder was adjusted from 3.5% to 2.5%, and the proportion of the granulation additive was adjusted from 0.5% to 1.5%. Except for the above, other conditions were exactly the same as those in Application Example 1.

### Application Example 4

This application example provides a granulation method for cathode materials, which uses the granulation additive provided in Example 1. However, in this granulation method, the ratio of the first conductive agent to the second conductive agent was adjusted from 1:1 to 1:0.2. Except for the above, other conditions were exactly the same as those in Application Example 1.

### Application Example 5

This application example provides a granulation method for cathode materials, which uses the granulation additive provided in Example 1. However, in this granulation method, the ratio of the first conductive agent to the second conductive agent was adjusted from 1:1 to 1:1.5. Except for the above, other conditions were exactly the same as those in Application Example 1.

### Application Example 6

This application example provides a granulation method for cathode materials, which uses the granulation additive provided in Example 1. However, in this granulation method, the second conductive agent was, instead of acetylene black, Ketjen black with a specific surface area of 500 m²/g. Except for the above, other conditions were exactly the same as those in Application Example 1.

### Application Example 7

This application example provides a granulation method for cathode materials, which uses the granulation additive provided in Example 1. However, in this granulation method, the second conductive agent was, instead of acetylene black, carbon nanotubes with a specific surface area of 800 m²/g. Except for the above, other conditions were exactly the same as those in Application Example 1.

### Application Example 8

This application example provides a granulation method for cathode materials, which uses the granulation additive provided in Example 1. However, in this granulation method, the second mixing process was adjusted, that is, the second mixing comprised mixing the mixed material with the binder first, and then adding and mixing with the granulation additive. Except for the above, other conditions were exactly the same as those in Application Example 1.

### Application Example 9

This application example provides a granulation method for cathode materials, which uses the granulation additive provided in Example 1. However, in this granulation method, the first mixing time was adjusted from 4 h to 6 h, and the second mixing process was adjusted, that is, the second mixing comprised mixing the mixed material with the binder first, and then adding and mixing with the granulation additive. Except for the above, other conditions were exactly the same as those in Application Example 1.

### Application Comparative Example 1

This application comparative example provides a granulation method for cathode materials. In this granulation method, the granulation additive was not used but replaced with an equivalent amount of the binder. Except for the above, other conditions were exactly the same as those in Application Example 1.

### Application Comparative Example 2

This application comparative example provides a granulation method for cathode materials. In this granulation method, polyacrylonitrile was used to replace the granulation additive. Except for the above, other conditions were exactly the same as those in Application Example 1.

### Application Comparative Example 3

This application comparative example provides a granulation method for cathode materials. In this granulation method, sodium polyacrylate was used to replace the granulation additive. Except for the above, other conditions were exactly the same as those in Application Example 1.

### Characterization and tests

I. Powder utilization rate: measured as the weight ratio of particles at 20-100 mesh in the total granulated cathode powder.
II. Flow rate limit range: expressed as the time required for 50 g of the granulated cathode powder passing through a standard funnel with a specified orifice. The evaluation was based on limit range data measured in 10 flow-rate tests. More uniform particles result in a smaller limit range.
III. Conductivity limit range: The test equipment was a four-probe powder resistivity & compaction density instrument from Initial Energy Science & Technology Co., Ltd. The compaction-conductivity of the granulated cathode powder was tested 10 times, and the conductivity value at a compaction density of 2.9 g/cm³ was recorded as the test result. The evaluation was based on limit range data measured in 10 tests. More uniform dispersion of active material and conductive agent in the cathode mixture results in a smaller limit range.
IV. Electrochemical Performance: the granulated cathode powder was compressed into a cathode sheet via punch forming under a pressure of 9 tons held for 0.1 s. The resulting cathode sheet was baked (dried) in vacuum at 200°C for 13 h, and then assembled into a CR2032 coin cell in a dry environment with a dew point below -45°C. In the cell, metallic lithium served as the anode sheet, polypropylene served as the separator, and the electrolyte consisted of 1 mol/L lithium perchlorate and propylene carbonate and dimethoxyethane in a volume ratio of 1:1. The obtained cells were subjected to washing, pre-discharging, and aging, followed by internal-resistance measurement. The cells were then stored at a high temperature of 125°C for 300 h, and then the internal resistance was measured to demonstrate stability.

The above results are recorded in Table 1.

**Table 1**

| Group | Granulation additive | Powder utilization rate (%) | Flow rate limit range (s) | Conductivity limit range (S/cm) | Cell internal resistance (Ω) | Internal resistance after storage at 125°C for 300 h (Ω) |
|---|---|---|---|---|---|---|
| Application Example 1 | Example 1 | 83.5% | 0.15 | 0.05 | 6.12 | 12.97 |
| | Example 2 | 79.7% | 0.19 | 0.06 | 6.35 | 13.81 |
| | Example 3 | 80.7% | 0.20 | 0.06 | 6.27 | 13.24 |
| Application Example 2 | Example 1 | 90.2% | 0.1 | 0.04 | 5.70 | 12.20 |
| Application Example 3 | Example 1 | 84.3% | 0.21 | 0.08 | 5.98 | 13.43 |
| Application Example 4 | Example 1 | 85.6% | 0.17 | 0.11 | 6.27 | 11.83 |
| Application Example 5 | Example 1 | 87.7% | 0.22 | 0.08 | 5.24 | 10.64 |
| Application Example 6 | Example 1 | 89.2% | 0.16 | 0.05 | 4.95 | 9.75 |
| Application Example 7 | Example 1 | 88.4% | 0.18 | 0.06 | 4.58 | 9.46 |
| Application Example 8 | Example 1 | 89.5% | 0.15 | 0.07 | 5.84 | 12.24 |
| Application Example 9 | Example 1 | 90.7% | 0.08 | 0.03 | 5.39 | 11.79 |
| Application Comparative Example 1 | None | 68.8% | 0.31 | 0.15 | 7.12 | 14.84 |
| Application Comparative Example 2 | Polyacrylon itrile | 74.5% | 0.18 | 0.12 | 6.54 | 15.68 |
| Application Comparative Example 3 | Sodium Polyacrylate | 76.4% | 0.17 | 0.11 | 6.37 | 15.59 |

By analyzing the data in Table 1, it can be concluded that:
From the comparison between Application Example 1 and Application Comparative Examples 1-3, it can be seen that the granulated cathode powder obtained using the technical solution incorporating the granulation additive of the present application exhibits higher powder utilization and smaller limit ranges of the flow rate and conductivity, which indicates more uniform cathode particles and more homogeneous cathode components, contributing to improved cathode stability. After high-temperature storage of the cell, the increase in internal resistance can be mitigated.

From the comparison between Application Example 2 and Application Example 3, it can be seen that if the content of the granulation additive exceeds 1%, the powder utilization rate decreases slightly, and the flow rate limit range and conductivity limit range increase, thereby affecting the uniformity of the cathode powder. The cathode produced using the granulation additive of the present application enhances the binding effect among manganese dioxide, the conductive agent, and the binder, thereby improving the stability of the cathode. After high-temperature storage of the cell, the increase in internal resistance can be mitigated.

From the comparison of the data of Application Example 1, Application Example 4, and Application Example 5, it can be seen that when acetylene black is used as the second conductive agent, the ratio of the first conductive agent to the second conductive agent has a relatively small impact on powder uniformity. When the ratio of graphite to acetylene black is 1:1.5, the conductivity of the cathode can be enhanced, and the internal resistance can be reduced.

From the comparison of the data of Application Example 1, Application Example 6, and Application Example 7, it can be seen that the species and proportion of conductive agents in the cathode raw materials have a relatively small impact on powder uniformity. However, when carbon nanotubes are used as the second conductive agent, the high specific surface area and high reactivity of carbon nanotubes enable the formation of a continuous conductive network within the cathode powder, which further enhances the overall conductivity of the cathode, reduces internal resistance, and improves the performance of the cell.

From the comparison of the data of Application Example 1, Application Example 8, and Application Example 9, it can be seen that the sequence of adding the granulation additive and the PTFE emulsion has a relatively small impact on the cathode powder. The pretreatment time of the raw materials, that is, the ball-milling duration of the cathode active material and the conductive agent, affects the uniformity of the cathode powder. The ball-milling time may be no less than 4 h. Considering the production efficiency, the ball-milling time is optionally 4 h.

It should also be noted that various specific technical features described in the above embodiments can be combined in any suitable manner as long as there is no conflict. To avoid unnecessary repetition, the present application will not describe all possible combinations.

In addition, various different embodiments of the present application can also be combined in any manner, as long as they do not violate the concept of the present application, and they should be regarded as disclosed by the present application.

## Claims

1. A granulation additive for cathode materials, which comprises a water-soluble polyether resin; the water-soluble polyether resin is prepared by subjecting an organic compound A to ring-opening polymerization by an organic weak base B serving as an initiator and a solvent C; and the organic compound A comprises at least one of an ether compound containing an ether functional group and/or an epoxide compound containing an epoxy group.

2. The granulation additive for cathode materials according to claim 1, wherein the ether compound comprises at least one of vinyl methyl ether, propylene oxide-ethylene oxide copolyether, or polyether polyol.

3. The granulation additive for cathode materials according to claim 2, wherein the polyether polyol comprises at least one of polyoxypropylene glycol, polyoxypropylene triol, or polytetramethylene ether glycol.

4. The granulation additive for cathode materials according to any one of claims 1-3, wherein the epoxide compound comprises alkylene oxide, and the alkylene oxide comprises at least one of epichlorohydrin, styrene oxide, ethylene oxide, cyclohexene oxide, or 1,2-butylene oxide.

5. The granulation additive for cathode materials according to claim 1, wherein the organic weak base B comprises at least one of potassium diisopropylamide, sodium dihexylamide, or potassium diphenylmethanide.

6. The granulation additive for cathode materials according to claim 1, wherein the solvent C comprises triethylene glycol and/or tetrahydrofuran.

7. The granulation additive for cathode materials according to claim 1, wherein a weight-average molecular mass of the water-soluble polyether resin is 0.5-8 million, and optionally, 1-4 million;
optionally, the water-soluble polyether resin is in granular form with an average particle size of 100-500 µm.

8. A granulation method for cathode materials, which comprises:
subjecting a cathode active material and a conductive agent to a first mixing to obtain a mixed material; subjecting the mixed material, a binder, and the granulation additive according to any one of claims 1-4 to a second mixing, and then performing granulation and baking in sequence to obtain a granulated cathode powder.

9. The granulation method for cathode materials according to claim 8, wherein the cathode active material comprises a cathode active material; the cathode active material comprises a manganese-containing oxide; the manganese-containing oxide comprises manganese dioxide; and a specific surface area of the cathode active material is 10-30 m²/g.

10. The granulation method for cathode materials according to claim 8 or 9, wherein the conductive agent comprises a first conductive agent and a second conductive agent; the first conductive agent comprises graphite; and the second conductive agent comprises at least one of acetylene black, conductive carbon black, carbon nanotubes, Ketjen black, or graphene;
optionally, a particle size D₅₀ of the first conductive agent is 10-80 µm, and optionally, 20-50 µm;
optionally, a specific surface area of the first conductive agent is 10-40 m²/g, and optionally, 20-40 m²/g;
optionally, a specific surface area of the second conductive agent is 50-800 m²/g, and optionally, 500-800 m²/g;
optionally, a mass ratio of the first conductive agent to the second conductive agent is 1:(0.1-1.5);
optionally, the binder comprises polytetrafluoroethylene;
optionally, based on a mass of the granulated cathode powder being 100%, the cathode active material accounts for 85%-95%, the conductive agent accounts for 4%-10%, the binder accounts for 0.8%-3.5%, and the granulation additive accounts for 0.2%-1.5%.

11. The granulation method for cathode materials according to any one of claims 8-10, wherein the first mixing comprises ball milling, and the ball milling is performed for a period of 2-4 h;
optionally, the baking is performed at a temperature of 170-190°C;
optionally, the baking is performed until a moisture content falls within 0.5-1.5wt%;
optionally, the granulation method for cathode materials further comprises sieving after the baking to obtain the granulated cathode powder within 20-100 mesh.

12. A granulated cathode powder, which is obtained via the granulation method according to any one of claims 8-11.

13. A preparation method for a cathode sheet, which comprises compressing the granulated cathode powder according to claim 12 to obtain the cathode sheet;
optionally, the compressing comprises punch forming, and the punch forming is performed under a pressure of 8-10 tons and for a pressure-holding period of 0.01-0.3 s;
optionally, the cathode sheet obtained from the punch forming is subjected to vacuum baking at 190-210°C for 10-16 h, for use of cell assembly.

14. A cathode sheet, which is obtained via the preparation method according to claim 13.

15. A battery, which comprises the cathode sheet according to claim 14.
